# EUROPEAN PATENT SPECIFICATION

(11) **EP 0 714 364 B1**
(45) Date of publication and mention of the grant of the patent: **18.11.1998**
(21) Application number: 94926449.3
(22) Date of filing: 06.09.1994
(51) Int. Cl.: B65B 1/28, B65G 69/18

(54) **HOPPER FOR DUSTY MATERIALS**
SCHÜTTGUTBEHÄLTER FÜR STAUBFÖRMIGE MATERIALIEN
TREMIE POUR MATERIAUX PRODUISANT DE LA POUSSIERE

(30) Priority: 06.09.1993 SE 9302853
(43) Date of publication of application: 05.06.1996
(73) Proprietor: Elestam, Lars-Göran, S-216 21 Malmö (SE)
(72) Inventor: Elestam, Lars-Göran, S-216 21 Malmö (SE)
(74) Representative: Müller, Karl-Ernst, Dr., Dipl.-Ing.
(86) International application number: SE9400827
(87) International publication number: WO9507218

(56) References cited:
- EP-A- 0 171 115
- DE-C- 4 220 465
- US-A- 2 531 743
- US-A- 4 054 161
- PATENT ABSTRACTS OF JAPAN, Vol. 11, No. 352, M-643; & JP,A,62 130 930 (OHBAYASHIGUMI LTD), 13 June 1987 (13.06.87).

## Description

The present invention relates to a hopper for dusty materials having an intake portion and a discharge portion and a casing wall surrounding both the intake and the discharge portions, the hopper comprising means for temporary closure of the hopper being positioned below the intake portion and above the discharge portion and being manoeuvred by drive drive means between open and closed position.

Large quantities of dust are often emitted in handling, such as loading, unloading and reloading of prinzipally bulk materials. Examples of cargo or materials which generate large quantities of dust are cement, cement slag, kaolin, aluminium oxide, certain fodder materials, fertilizers, etc. In addition to being harmful from the point of view of the environment, such dust entails a certain material loss.

A hopper according to the features as mentioned above is known from EP-A 0 171 115; as far as means for temporary closure of the hopper are described these means are formed by rotating closure pieces which are positioned in one plane between the intake portion and the discharge portion of the hopper. When the dusty material shall be brought into the hopper first the rotating pieces are in a position closing the opening of the casing so that a grab bucket deposits the material onto the closed rotating peaces first. After removing the grab bucket from the hopper an additional sliding cover is moved above the upper edges of the casing thereafter the rotating pieces are brought into their open position to let the material flow between the pieces into the discharge portion of the hopper. Before bringing the grab bucket again into the hopper the sliding cover has to be reopend and the rotating pieces have to be brought into their closed position. The disadvantage of this known equipment therefore is that two mechanic movable parts of the closure system are to be moved twice during each charging process.

It is therefore the object of the invention to provide a hopper according to the features as mentioned above with more simple created and effective working means for temporary closure of the hopper. This objekt is attained by means of an apparatus according to the characterizing clause of claim 1. Expedient embodiments are disclosed in the appended subclaims.

The hopper according to the present invention is primarily intended for use when bulk cargo is handled by a grab bucket. Grab buckets of this type are generally supported by one or more wire ropes, but in certain cases are also supported by other means such as an arm or a boom. Hoppers of this type are disposed, for example, in ports, at intake areas for industrial plants, etc.

One concept on which the present invention is based is that the bucket is to be emptied in an almost enclosed compartment, the powerful dust formation thereby being easier to control and take care of with the aid of a suction apparatus. The term suction apparatus is here taken to signify an apparatus comprising an extraction fan and a filter. The suction apparatus is, in this instance, dimensioned to be capable of reliably taking care of the dust in the enclosed compartment in that the suction apparatus is dimensioned with excess capacity in relation to the size of the enclosed compartment.

The present invention affords a mechanically simple apparatus which gives dust-free reloading of bulk cargo at hoppers.

The present invention will be described in greater detail hereinbelow, with reference to the accompanying Drawings, in which:
- Fig. 1: is a section through one embodiment of a hopper according to the invention;
- Fig. 2: is a schematic Drawing from above illustrating the closure of the hopper with one type of closure device; and

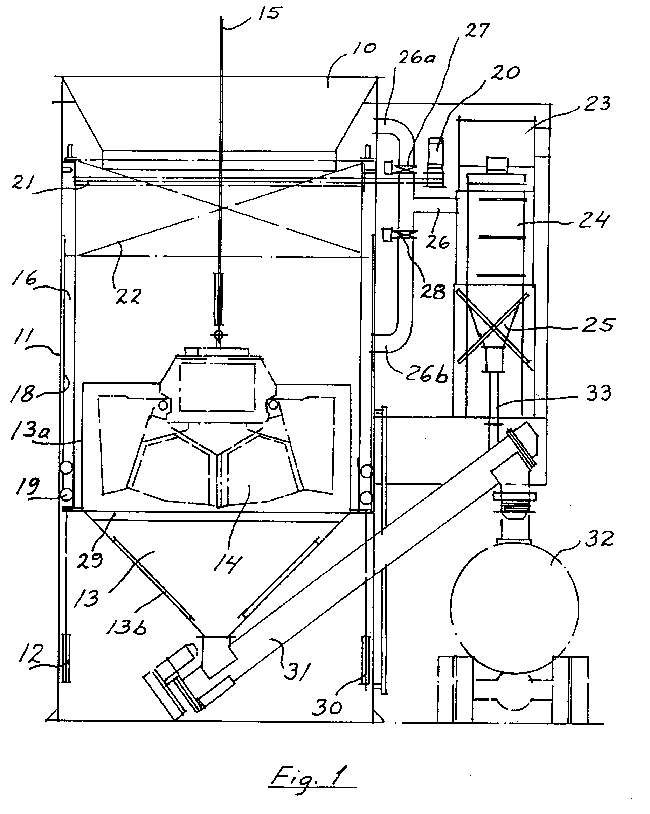

In the embodiment illustrated in Fig. 1, the hopper comprises a cylindrical casing wall 11 supported on support legs 12. The hopper may have any optional cross-sectional configuration, but is most generally cylindrical. In the upper region, the casing wall 11 supports an intake portion in the form of an intake cone 10 with a through going aperture. The upper edge of the intake cone 10 is flush with the upper edge of the casing wall 11. The intake cone 10 tapers downwardly into the hopper. In the lower region, the casing wall 11 supports a discharge portion in the form of a discharge funnel 13. The discharge funnel has an upper portion 13a with a vertical wall and a lower conical portion 13b. A grid 29 is provided between the upper portion 13a of the discharge funnel 13 and its lower, conical portion 13b, the grid 29 restricting the downward movement of a grab bucket 14 in the hopper. The grid 29 also filters off any possible large-piece elements included in the bulk material. The casing wall 11 surrounds the intake cone 10 and the upper portion 13a of the discharge funnel 13.

The inner circumference of the upper portion 13a of the discharge funnel 13 is sufficiently large to allow the grab bucket 14 to open within this bounding definition. Normally, the bulk material is never permitted to accumulate above the level of the upper edge of the discharge funnel 13. In the illustrated embodiment, the bucket is carried by a wire rope 15. In other embodiments, the bucket may be carried by up to four or more wire ropes. In yet further embodiments, the grab bucket 14 is carried on an arm or boom.

The lower portion 13b of the discharge funnel 13 connects with its lower edge to a conveyor apparatus 31 such as a screw conveyor or a conveyor belt. The bulk material discharged from the discharge funnel 13 of the hopper is, in the illustrated embodiment, removed by means of the conveyor apparatus 31 to a bulk transport vehicle 32. The bulk transport vehicle may be a truck, railway wagon, container or the like. In other embodiments, the bulk material is emptied direct into the vehicle, pneumatic tube conveyors, etc. or in other positions in the transport chain from the hopper to the end station.

A tubular element 16 of cloth, also designated a stocking hereinbelow, is suspended within the hopper. The cloth may be canvas, fibre reinforced plastic or other suitable flexible material which permits the handling described below. The upper edge 16a of the stocking 16 is movably supported in a circumferential rail 17 disposed on the inner face of the casing wall 11. The rail 17 is disposed flush with the lower portion of the intake cone 10. The lower edge 16b of the stocking 16 is connected to runners 19. The runners 19 run in vertical guides 18 disposed on the inner surface of the casing wall 11. To keep the stocking taut, weights 30 are disposed, suspended in the lower edge 16b of the stocking. The number of cooperating guides 18 and runners 19 as well as the number of weights 30 vary from embodiment to embodiment. In the embodiment illustrated in Fig. 1, four guides 18 and four weights 30 have been provided. While the weights 30 are, in the illustrated embodiment, shown as suspended in the lower edge 16b of the stocking 16 with the aid of a wire, a person skilled in the art will realize that the weights may be provided in many other different ways.

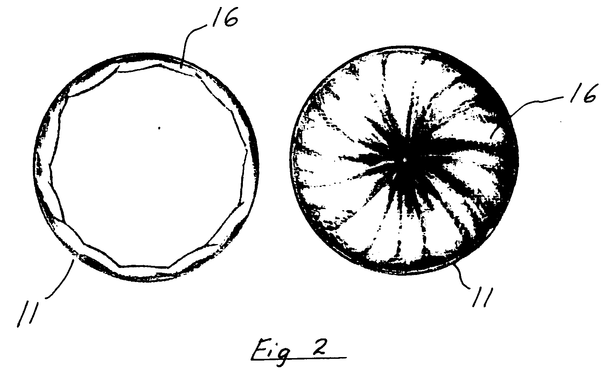

Drive means 20 are provided for driving the upper edge 16a of the stocking 16 by the intermediary of wires 21 along the rail 17. The upper edge 16a of the stocking 16 is, in this instance, secured in a ring which runs about the rail 17. The drive means 20 are disposed outside the hopper proper. It will be obvious to a person skilled in the art that there are numerous different ways of driving the upper edge 16a of the stocking. On rotation of the upper edge of the stocking 16 with the aid of the drive means 20 and the wires 21, the lower edge 16b of the stocking is simultaneously moved upwards along the casing wall 11, thanks to the guides 18 and the runners 19. Given that the lower edge of the stocking is not rotated, the stocking 16 will here be closed approximately in the same manner as a camera shutter around the wire rope 15 of the grab bucket when the upper and lower edges of the stocking 16 are rotated in relation to one another. The raised and closed stocking is intimated by the ghosted cross 22 in Fig. 1. The position where the stocking closes as a camera shutter may vary. Fig. 2 also schematically shows by means of a view from above how the stocking 16 closes as a camera shutter. The left-hand half of the Figure shows the position when the stocking 16 is suspended along the casing wall 11 and the right-hand half of the Figure shows the position when the upper and lower edges of the stocking 16 have been rotated in relation to one another.

A suction device 23 is disposed beside the hopper. The suction device 23 sucks in dust from the hopper via a suction conduit 26, whereafter the dust intake is, via a dust filter 24, an emptying pocket 25 and a conduit 33, recycled back to the conveyor apparatus 31 which leads to a bulk transport vehicle 32. In other embodiments, the conduit 33 connects to the discharge funnel of the hopper or to other parts in the transport chain from the hopper proper to the bulk transport vehicle 32 or other end station. The suction conduit 26 is in communication with the interior of the hopper via an upper branch pipe 26a and a lower branch pipe 26b. A valve 27,28 is disposed in each branch pipe 26a and 26b, by means of which each respective branch pipe 26a,26b may be opened and closed. The upper branch pipe 26a discharges in the hopper in the region of the intake cone 10, while the lower branch pipe 26b discharges in the hopper at a height which lies above the upper portion of the discharge funnel 13. The exact position of the discharge of each respective branch pipe 26a,26b in the hopper is adapted to meet relevant conditions. The major requirement in respect of placement of the discharge openings is that the lower branch pipe 26b must discharge in a position which lies below the closure device when this is in a closed position. The position of the discharge of the branch pipe 26b must further be such that the lower edge of the stocking 16 has safely passed the discharge when the stocking 16 is in its raised position.

The upper portion of the hopper may be provided with reinforcements to be able to absorb and withstand any possible impact from the grab bucket 14.

The hopper is also provided with control and monitoring means (not shown) for sensing the position and controlling the different drive means for the closure device and valves. The control and monitor means are used to enable the personnel operating the bucket to know the position of the closure devices and to control the opening and closing of these devices. The control and monitor means are also employed for regulating opening and closure of the valves 27,28 of the branch pipes 26a and 26b.

When the hopper according to the present invention is put into use, a filled grab bucket 14 is moved into the hopper. The bucket 14 descends into the upper portion 13a of the discharge funnel and, at most, down to the grid 29. A sensor, for example a photocell, senses when the bucket descends into the hopper and, after a certain time, the time normally required for the bucket to descend to the bottom, the closure device begins to close. For time control, use is normally made of a time relay. In another embodiment, it is sensed when the bucket has reached the emptying position in the discharge funnel 13. In the embodiment according to Figs. 1 and 2, the upper edge of the stocking 15 is then twisted, normally through approx. 90°. At the same time the valve 27 closes in the upper branch pipe 26a and the valve 28 in the lower branch pipe 26b opens. The normal position for these valves when the hopper is not closed is that the valve 28 is closed and the valve 27 is open, in which event suction thus takes place in connection to the intake cone 10.

To prevent the operator from raising or lowering the grab bucket 14 during the time while the closure device is in the process of opening or closing and during the time it is closed, an indication is made to the operator when there is a risk that the closure device will be damaged if the grab bucket is raised or lowered. In one embodiment, this indication is effected in that a red lamp (not shown) clearly visible on the outside of the hopper lights with an unbroken or blinking flash during the time when the grab bucket may not be raised or lowered. If desired, a green lamp may also be provided which lights or flashes when the closure device is completely open and thus permits raising or lowering of the grab bucket. In other embodiments, the lamp has been supplemented with or replaced by other indicator means, for example remote-controlled lamps on an operator panel.

When the closure devices have been closed in accordance with the foregoing, there will thus be formed an almost closed compartment provided with a powerful extraction suction device. In this closed compartment, the grab bucket is opened and releases the bulk material down into the lower portion 13b of the discharge funnel 13, in which event there normally occurs a thick dust cloud. The dust which does not fall back straight down into the discharge funnel 13 is sucked out by the lower branch pipe 26b of the suction device 23. After passage through the dust filter 24, the bulk material is recycled, for example via an emptying pocket 25 and a conduit 33 back to the rest of the bulk material. From the discharge funnel 13, the bulk material is led via a conveyor 31 to a bulk loading vehicle 32.

Depending upon the material conveyed and its dust-creation effect, the closure device is opened after a time which is sufficient to allow basically all raised dust to have been sucked out via the suction device 23. The time when the closure device is closed is adapted to the material conveyed and the volume of the grab bucket. At the same time as the closure device opens, the valve 28 in the lower branch pipe 26b is closed and the valve 27 in the upper branch pipe 26a is opened. When the operator receives an indication that the closure device has completely opened, the grab bucket may once again be raised for collecting a new load, whereupon the above procedure is repeated.

The above-detailed description has referred to but a limited number of embodiments of the present invention, but it will be obvious to a person skilled in the art that the present invention encompasses a large number of embodiments without departing from the scope of the appended Claims.

## Claims

1. A hopper (1) for dusty material having an intake portion (10) and a discharge portion (13) and a casing wall (11) surrounding both the intake and the discharge portions, the hopper (1) comprising means (16) for temporary closure of the hopper (1) being positioned below the intake portion (10) and above the discharge portion (13) and being manoeuvred by drive drive means (20, 21) between open and closed position, characterized in that the closure means are in the form of a stocking (16) which is movably journalled in its upper (16a) and lower (16b) edges, and in that said stocking (16) closes the hopper by rotation of its upper (16a) and lower (16b) edges in relation to one another.

2. Hopper according to claim 1 characterized in that a suction device (23) is connected to the interior of the hopper and displays at least one pipe (26b) which is in communication with that part of the hopper with lies beneath the closure means (16) when this is in the closed position.

3. Hopper according to claim 2, characterized in that sensors and control means are provided for sensing the position of the grab bucket (14), for sensing the position of the closure means (16), for controlling the drive means (20, 21) for the closure means (16) depending upon the position of the grab bucket (14), for controlling the valves of the suction device and for indicating to the operator whether the grab bucket (14) may be raised or lowered.

## Patentansprüche

1. Schüttgutbehälter (1) für staubförmiges Material mit einem Aufnahmeabschnitt (10) und einem Abgabeabschnitt (13) and einer Gehäusewand (11), die sowohl den Aufnahme- als auch den Abgabeabschnitt umgibt, wobei der Schüttgutbehälter (1) eine Einrichtung (16) zum zeitweisen Schließen des Schüttgutbehälters (1) umfaßt, die unterhalb des Aufnahmeabschnitts (10) und oberhalb des Abgabeabschnitts (13) angeordnet ist und von Antriebsmitteln (20, 21) zwischen einer offenen und einer geschlossenen Position bewegt wird, dadurch gekennzeichnet, daß die Verschließeinrichtung die Form eines Strumpfes (16) hat, der an seinen oberen (16a) und unteren (16b) Rändern beweglich gelagert ist, und daß der Strumpf (16) den Schüttgutbehälter durch Drehen seiner oberen (16a) und unteren (16b) Ränder in bezug aufeinander verschließt.

2. Schüttgutbehälter nach Anspruch 1, dadurch gekennzeichnet, daß eine Saugeinrichtung (23) mit dem Inneren des Schüttgutbehälters verbunden ist und wenigstens ein Rohr (26b) aufweist, das mit dem Teil des Schüttgutbehälters in Verbindung steht, der unterhalb der Verschließeinrichtung (16) liegt, wenn diese sich in der geschlossenen Position befindet.

3. Schüttgutbehälter nach Anspruch 2, dadurch gekennzeichnet, daß Sensoren und Steuermittel zum Erfassen der Position des Greiferkübels (14), zum Erfassen der Position der Verschließeinrichtung (16), zum Steuern der Antriebsmittel (20, 21) für die Verschließeinrichtung (16) abhängig von der Position des Greiferkübels (14), zum Steuern der Ventile der Saugeinrichtung und um der Bedienperson anzuzeigen, ob der Greiferkübel (14) angehoben oder gesenkt werden kann, bereitgestellt sind.

## Revendications

1. Trémie (1) pour une matière poussiéreuse présentant une partie d'entrée (10) et une partie de décharge (13) et une paroi d'enveloppe (11) entourant à la fois les parties d'entrée et de décharge, la trémie (1) comprenant des moyens (16) permettant de fermer temporairement la trémie (1) qui sont positionnés au-dessous de la partie d'entrée (10) et au-dessus de la partie de décharge (13) et manoeuvrés par des moyens de commande (20, 21) entre une position ouverte et une position fermée, caractérisée en ce que les moyens de fermeture sont sous la forme d'une bâche (16) mobile sur des paliers contenus dans ses bords supérieur (16a) et inférieur (16b) et en ce que ladite bâche (16) ferme la trémie par rotation de ses bords supérieur (16a) et inférieur (16b) l'un par rapport à l'autre.

2. Trémie selon la revendication 1, caractérisée en ce qu'un dispositif d'aspiration (23) est relié à l'intérieur de la trémie et présente au moins un tuyau (26b) qui est en communication avec cette partie de la trémie qui est située au-dessous des moyens de fermeture (16) lorsque celle-ci est en position fermée.

3. Trémie selon la revendication 2, caractérisée en ce que des capteurs et des moyens de commande sont prévus pour détecter la position de la benne automatique (14), pour détecter la position des moyens de fermeture (16), pour commander les moyens de commande (20, 21) des moyens de fermeture (16) en fonction de la position de la benne automatique (14), pour commander les vannes du dispositif d'aspiration et pour indiquer à l'opérateur si la benne automatique (14) peut être relevée ou abaissée.
